(19) Europäisches Patentamt / European Patent Office / Office européen des brevets

(11) **EP 2 278 725 B1**

(12) **FASCICULE DE BREVET EUROPEEN**

(45) Date de publication et mention
de la délivrance du brevet:
**14.03.2012   Bulletin 2012/11**

(51) Int Cl.:
***H04B 1/7097*** *(2011.01)*

(21) Numéro de dépôt: **10168450.4**

(22) Date de dépôt: **05.07.2010**

(54) **Procédé et dispositif de traitement de signaux utiles reçus par un noeud de communication d'un système CDMA, pour l'estimation de la puissance du bruit thermique**

Verfahren und Vorrichtung zur Verarbeitung eines von einem Knoten eines CDMA-Kommunikationssystem empfangenen Nutzsignals, um die Leistung des thermischen Rauschens zu schätzen

Method and apparatus for processing wanted signals, received by a node of a CDMA communication system, in order to estimate the power of thermal noise

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité:  **23.07.2009   FR 0955169**

(43) Date de publication de la demande:
**26.01.2011   Bulletin 2011/04**

(73) Titulaire: **Alcatel Lucent**
**75007 Paris (FR)**

(72) Inventeurs:
• **Betrencourt, Samuel**
  **92140, Clamart (FR)**
• **Ben Rached, Nidham**
  **78141, Velizy (FR)**

(74) Mandataire: **Nicolle, Olivier et al**
**Alcatel-Lucent International**
**32, avenue Kléber**
**92700 Colombes (FR)**

(56) Documents cités:
**WO-A1-2009/038508     WO-A2-2004/082154**

EP 2 278 725 B1

**Description**

L'invention concerne les systèmes de radiocommunication à technologie d'accès de type CDMA (« Code Division Multiple Access » - accès multiple par répartition de codes), et plus précisément l'estimation du bruit thermique (généralement référencé $N_0$) dans certains noeuds de communication qui font partie des réseaux d'accès radio de tels systèmes CDMA.

L'invention concerne tout type de système CDMA, et notamment les réseaux de communication sans fil de type CDMA 2000, W-CDMA (« Wideband-CDMA », comme par exemple les réseaux UMTS et FOMA) et HSPA.

Par ailleurs, on entend ici par « noeud de communication » un équipement de radiocommunication assurant l'interface de communication entre des terminaux de communication sans fil d'usagers et un système CDMA. Il pourra par exemple s'agir d'une station de base (appelée Node B dans le cas d'un réseau de type UMTS)

Comme le sait l'homme de l'art, un signal radio qui est reçu par un noeud (de communication) comprend généralement un signal total utile, constitué par la somme des N signaux utiles reçus des N utilisateurs qui trafiquent sur la cellule $\left(\sum_{i=1}^{N} E_i\right)$ et dont la contribution est liée à la charge de la cellule. Le module de réception du noeud vient ajouter à ce signal total utile un bruit thermique ($N_0$). Par ailleurs, le signal total utile peut également comporter des signaux issus de sources d'interférences que sont par exemple les autres cellules voisines du système CDMA considéré, ainsi qu'éventuellement les signaux d'un autre système de radiocommunication à bande de fréquences étroite (comme par exemple un réseau GSM).

Il est rappelé que le bruit thermique ($N_0$) d'un module de réception varie dans le temps du fait qu'il dépend de la température. Sa valeur en watts (W) est en effet égale à k*T*b, où k est la constante de Boltzmann, T est la température ambiante en degrés Kelvin (K) et b est la largeur en Hertz (Hz) de la bande de fréquences qui est utilisée par le système CDMA considéré. On notera que le bruit thermique capté dans un équipement est aussi dépendant du facteur de bruit des composants électroniques des modules de réception, lequel est soumis à des variations dans le temps et dépend de l'équipement considéré. Il ne peut donc pas être considéré comme constant et connu a priori, et donc son évolution temporelle doit être suivie.

Le bruit thermique ($N_0$) revêt une réelle importance car il est l'un des deux paramètres du rapport $I_{tot}/N_0$ (généralement référencé η et appelé en anglais « Uplink Noise Rise ») qui est utilisé par le séquenceur d'une station de base pour estimer la charge de trafic sur la voie montante (« uplink »). En effet, la charge relative sur la voie montante (généralement référencée L), qui caractérise la quantité de ressources qui est utilisée à un instant donné sur la voie montante par rapport à la somme totale des ressources pouvant être utilisées sur cette même voie montante, est donnée par la relation $L = \dfrac{I_{tot} - N_0}{I_{tot}} = 1 - \dfrac{1}{\eta}$. Plus le rapport η est élevé, moins le séquenceur alloue de bande passante du fait que dans un système CDMA tous les signaux utiles des différents usagers sont dans la même bande et donc si l'on monte la puissance associée au signal utile de l'un des usagers cela entraine une augmentation des autres signaux utiles du fait de l'auto interférence (effet proche lointain dans les systèmes CDMA).

On comprendra qu'un moyen pour estimer la charge de trafic sur la voie montante consiste à estimer la puissance du bruit considéré (de type blanc gaussien - hypothèse vraie pour le bruit thermique), puis à exclure ce bruit du signal total reçu (composé du signal total utile et du bruit) et à considérer que ce qui reste correspond à la charge de trafic.

Pour estimer le bruit thermique, on peut par exemple commencer par estimer la puissance totale $I_{tot}$ reçue à un moment de la journée où il y a une absence de trafic (par exemple vers 3 heures du matin), en effectuant des mesures par exemple de type RSSI (« Received Signal Strength Indication » - mesures de puissance reçue), puis on peut considérer que cette valeur particulière de $I_{tot}$ est approximativement égale à la contribution du bruit thermique ($N_0$). On comprendra que cette méthode ne convient pas lorsque la température varie sensiblement pendant la journée, ce qui est fréquemment le cas. En outre cette méthode ne permet pas de s'affranchir des interférences venant d'un autre système de radiocommunication.

Il est également possible d'utiliser un algorithme complexe reposant sur des filtrages prédictifs. Mais, cela nécessite une augmentation de la fréquence à laquelle on a besoin d'informations relatives au bruit thermique. En outre cette solution souffre d'une forte complexité et requiert d'autres informations complémentaires dont les erreurs et dérives se cumulent. Un tel algorithme est divulgué par le document WO 2009/038502.

Par ailleurs, le séquenceur prenant des décisions selon une fréquence très élevée (typiquement toutes les 2 ms), l'estimée du bruit thermique $N_0$ doit se faire très rapidement de manière à permettre le suivi d'au moins ses variations lentes. Or, les techniques connues ne permettent pas un tel suivi.

L'invention a donc pour but d'améliorer la situation.

Elle propose à cet effet un procédé de traitement destiné à estimer la puissance du bruit thermique qui s'ajoute aux signaux qui, d'une première part, ont été reçus par un noeud de communication d'un système de radiocommunication de type CDMA, d'une deuxième part, ont été transmis dans une bande de fréquences qui correspond à un intervalle de temps élémentaire (Tc) défini par le standard du système considéré, et d'une troisième part, ont été modulés par une forme d'onde (w(t)) de format prédéterminé par le standard du système considéré.

Ce procédé de traitement comprend les étapes suivantes:

i) numériser un signal comprenant du bruit et au moins un signal utile, reçu sur une période de temps ayant une durée prédéterminée (par exemple égale à la durée d'un « slot » qui, dans le cas de l'UMTS, vaut 666 $\mu$s) selon une cadence d'échantillonnage qui est égale à un paramètre de sur-échantillonnage M divisé par l'intervalle de temps élémentaire (Tc), M étant au moins égal à 2,
ii) estimer au moins deux auto-corrélations du signal numérisé ayant des décalages temporels différents, inférieurs à l'intervalle de temps élémentaire (Tc) et multiples du rapport Tc/M, et
iii) estimer la puissance du bruit thermique qui est ajouté aux signaux reçus par le noeud de communication à partir des auto-corrélations estimées du signal numérisé et des propriétés de la forme d'onde (w(t)) pour les décalages temporels des estimées.

Le dispositif proposé peut comporter d'autres caractéristiques qui peuvent être prises séparément ou en combinaison, et notamment :

- on reproduit les étapes i) à iii) avec les signaux reçus sur une autre période de temps ayant substantiellement la même durée, de manière à obtenir une autre estimée de la puissance du bruit thermique, puis on effectue un filtrage de ces estimées ;
- à l'étape iii) on peut estimer la puissance du bruit thermique à partir d'un système d'équations linéaires qui sont constituées chacune par deux composantes d'auto-corrélation ;
- à l'étape ii) on peut utiliser un paramètre de sur-échantillonnage M égal à 4 ;
- à l'étape ii) on peut utiliser des décalages temporels multiples de 1/4 ;
- en présence de signaux utiles reçus comportant une contribution issue d'un autre système de radiocommunication à spectre de bande de fréquences étroite ($F_{nb}$), on peut estimer au moins trois auto-corrélations du signal numérisé ayant trois décalages temporels différents, inférieurs à l'intervalle de temps élémentaire (Tc), au moins deux de ces décalages temporels étant des multiples du rapport Tc/M tandis qu'un troisième est de l'ordre de grandeur de l'inverse de la largeur de la bande de fréquences de cet autre système de radiocommunication (il s'agit par exemple d'un multiple de Tc/M qui est compris strictement dans l'intervalle [$1/(2*F_{nb})$ ; $1/F_{nb}$]).

L'invention propose également un dispositif de traitement destiné à estimer la puissance du bruit thermique qui s'ajoute aux signaux qui, d'une première part, ont été reçus par un noeud de communication d'un système de radiocommunication de type CDMA, d'une deuxième part, ont été transmis dans une bande de fréquences qui correspond à un intervalle de temps élémentaire (Tc) défini par le standard du système considéré, et d'une troisième part, ont été modulés par une forme d'onde (w(t)) de format prédéterminé par le standard du système considéré.

Ce dispositif de traitement comprend :

- des moyens d'échantillonnage chargés de numériser un signal reçu sur une période de temps ayant une durée prédéterminée, selon une cadence d'échantillonnage qui est égale à un paramètre de sur-échantillonnage M divisé par l'intervalle de temps élémentaire (Tc), M étant au moins égal à 2, et

- des moyens de calcul chargés, d'une part, d'estimer au moins deux auto-corrélations du signal numérisé ayant des décalages temporels différents, inférieurs à l'intervalle de temps élémentaire (Tc) et multiples du rapport Tc/M, et ii) d'estimer la puissance du bruit thermique qui est ajouté aux signaux reçus par le noeud de communication à partir des auto-corrélations estimées du signal numérisé et des propriétés de la forme d'onde (w(t)) pour les décalages temporels des estimées.

Le dispositif selon l'invention peut comporter d'autres caractéristiques qui peuvent être prises séparément ou en combinaison, et notamment :

- ses moyens de calcul peuvent être chargés d'effectuer un filtrage choisi d'estimées du bruit thermique qui ont été obtenues à partir d'au moins deux signaux reçus sur des périodes de temps différentes mais ayant substantiellement la même durée de manière à obtenir une estimée de la puissance du bruit thermique de meilleure précision ;

**EP 2 278 725 B1**

- ses moyens de calcul peuvent être chargés d'estimer chaque bruit thermique à partir d'un système d'équations linéaires qui sont constituées chacune par deux composantes d'auto-corrélation ;
- ses moyens d'échantillonnage peuvent être chargés d'utiliser une valeur du paramètre de sur-échantillonnage M qui est égale à 4 ;
- ses moyens de calcul peuvent être chargés d'utiliser des décalages temporels qui sont des multiples de 1/4 ;
- ses moyens de calcul peuvent être chargés, en présence de signaux utiles reçus comportant une contribution issue d'un autre système de radiocommunication à spectre de bande de fréquences étroite ($F_{nb}$), d'estimer au moins trois auto-corrélations du signal numérisé ayant trois décalages temporels différents, au moins deux de ces décalages temporels étant des multiples du rapport Tc/M tandis qu'un troisième est de l'ordre de grandeur de l'inverse de la largeur de la bande de fréquences de cet autre système de radiocommunication (il s'agit par exemple d'un multiple de Tc/M qui est compris strictement dans l'intervalle [$1/(2*F_{nb})$ ; $1/F_{nb}$]).

L'invention propose également un noeud de communication, destiné à faire partie d'un réseau d'accès radio d'un système de radiocommunication de type CDMA, et équipé d'un dispositif de traitement du type de celui présenté ci-avant.

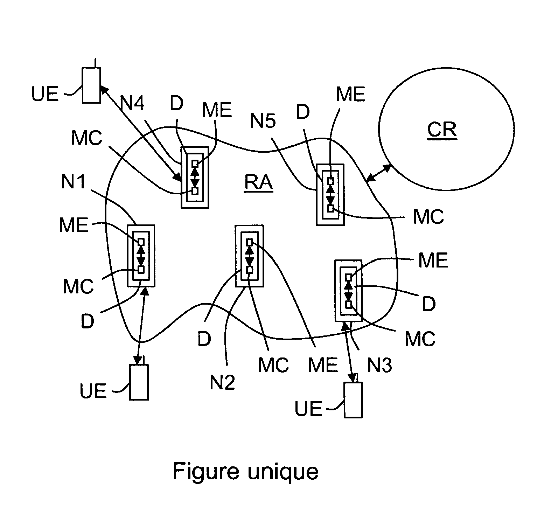

D'autres caractéristiques et avantages de l'invention apparaîtront à l'examen de la description détaillée ci-après, et du dessin annexé, sur lequel l'unique figure illustre de façon très schématique un réseau d'accès radio d'un réseau CDMA comprenant des stations de base équipées d'un dispositif de traitement selon l'invention. Le dessin annexé pourra non seulement servir à compléter l'invention, mais aussi contribuer à sa définition, le cas échéant.

L'invention a pour objet d'offrir un dispositif de traitement (D) destiné à estimer la puissance du bruit thermique sur la voie montante pour au moins un noeud de communication (Ni) d'un système de radiocommunication de type CDMA (RA, CR), en présence de bruit d'interférence.

Dans ce qui suit, on considère, à titre d'exemple non limitatif, que le système de radiocommunication est un réseau de type W-CDMA (« Wideband-CDMA ») comme par exemple un réseau UMTS (3G). Mais, l'invention n'est pas limitée à ce type de système CDMA. Elle concerne en effet tout type de système CDMA, et notamment les réseaux (ou infrastructures) de communication sans fil de type CDMA 2000, W-CDMA et HSPA.

On a schématiquement et fonctionnellement représenté sur l'unique figure un réseau UMTS. Un tel réseau comprend un coeur de réseau (ou « Core Network » en anglais) CR et un réseau d'accès radio RA, couplés l'un à l'autre.

Le réseau d'accès radio RA (ici de type UTRAN) comporte notamment des équipements de réseau, également appelés noeuds de communication, tels que des stations de base Ni (appelées Node Bs dans le cas d'un réseau UMTS) et des contrôleurs de réseau radio (appelés RNCs dans le cas d'un réseau UMTS et non représentés), raccordés entre eux.

Chaque station de base Ni (ici i = 1 à 5) est associée à une cellule (logique) couvrant une partie de la zone de couverture radio du réseau UMTS et dans laquelle des terminaux (de communication non filaires) UE peuvent établir (ou poursuivre) des communications (ou liaisons) ou sessions radio.

Chaque contrôleur de réseau radio est associé à au moins une cellule (logique) et est donc couplé à au moins une station de base Ni.

Comme indiqué ci-avant, l'invention est destinée à fournir des estimées de la puissance du bruit thermique $N_0$ qui sont utiles dans la chaîne de réception de chaque noeud de communication qui constitue une station de base Ni (ou équivalent fonctionnel).

Ces estimées de la puissance du bruit thermique $N_0$ peuvent être obtenues en mettant en oeuvre un procédé tel que proposé pour chaque station de base Ni. Dans ce qui suit, on considère à titre d'exemple non limitatif que le procédé proposé est mis en oeuvre de façon distribuée dans chacune des stations de base Ni par des dispositifs de traitement D selon l'invention. En d'autres termes, chaque station de base Ni est couplée à son propre dispositif de traitement D. Cela est préférable, notamment dans certaines situations qui nécessitent de connaître le facteur de bruit courant du module de réception d'une station de base Ni.

On entend ici par « station de base (Ni) couplée à un dispositif de traitement (D) » aussi bien le fait qu'une station de base Ni est connectée à un dispositif de traitement D, que le fait qu'une station de base Ni comprend un dispositif de traitement D (comme c'est le cas dans l'exemple non limitatif illustré sur l'unique figure).

Par conséquent, un dispositif de traitement D, selon l'invention, peut être réalisé sous la forme d'une combinaison de circuits électroniques et de modules logiciels (ou informatiques), ou bien sous la forme de circuits électroniques, ou encore sous la forme de modules logiciels.

Comme indiqué ci-avant, on considère ci-après, à titre d'exemple non limitatif, que le procédé proposé est mis en oeuvre dans chaque station de base Ni, et plus précisément par chaque dispositif (de traitement) D qui est associé (ou couplé) à une station de base Ni du réseau UMTS.

Dans une première étape (i) on numérise un signal $S_{tot}(t)$ comprenant des signaux utiles et du bruit, reçu sur une période de temps ayant une durée choisie par une station de base (ou Node B) Ni, selon une cadence d'échantillonnage Fe qui est égale à un paramètre de sur-échantillonnage M divisé par un intervalle de temps élémentaire (ou

4

« time chip ») Tc du réseau UMTS. On a donc Fe = M/Tc = M.Fc (où Fc est la cadence ou fréquence élémentaire du réseau UMTS). L'intervalle de temps élémentaire (ou time chip) Tc est la durée élémentaire normée du pulse (ou forme d'onde) UMTS w(t).

Par exemple, la durée choisie du signal analysé peut être égale à 666 μs.

En raison du critère de Nyquist, le paramètre de sur-échantillonnage M est choisi au moins égal à 2. Par exemple, on peut choisir une valeur de M égale à 4 (dans ce cas sur un intervalle de temps élémentaire (ou time chip) Tc on a quatre échantillons d'un même symbole).

Cette première étape (i) peut être mise en oeuvre par un module d'échantillonnage ME du dispositif D qui est associé à la station de base (ou Node B) Ni.

Il est rappelé que le signal qui est transmis par un terminal UE (d'un usager), à destination d'une station de base Ni, est donné par la relation $X_k(t)=\sqrt{E}\sum_{i=-\infty}^{+\infty}S_k(i)a_{k,i}(t-iT)$, où E représente l'énergie du signal (utile) qui est transmis par le terminal UE, $S_k(i)$ représente le ième symbole d'une trame qui est issue d'un terminal UE, T représente la durée d'un symbole et est ici égale (par utilisation d'un code de canalisation de longueur L chips) à L.Tc, $a_{k,i}(t-iT)$ est un coefficient donné par la relation $a_{k,i}(t-iT)=\sum_{j=0}^{L-1}c_{k,i}(jT_c)imp(t-jT_c)$, imp(t) est la forme d'onde (ou forme de pulse UMTS) également référencée w(t) dans le texte, et $C_{k,i}$ est un coefficient complexe de séquence d'intervalle de temps élémentaire (ou « time chip ») qui résulte d'opérations de canalisation et de brouillage.

Sans perte de généralité, par normalisation la relation donnant le signal (utile) transmis $X_k(t)$ peut être réécrite comme suit :

$$X_k(t)=\sum_{i=-\infty}^{+\infty}c_k(iT_c)imp(t-iT_c).$$

Le signal qui est reçu par une station de base Ni (en provenance de K terminaux UE) est donné par la relation :

$$S_{tot}(t)=\sum_{k=1}^{K}X_k(t)+N_0(t) \quad =\sum_{k=1}^{K}\sum_i c_k(iT_c).imp(t-iT_c-\tau_k)+N_0(t),$$

où $N_0(t)$ est le bruit thermique dont la puissance doit être estimée et k est l'indice qui représente les terminaux (k = 1 à K).

C'est ce signal $S_{tot}(t)$ qui est numérisé lors de la première étape (i) selon la cadence d'échantillonnage Fe = M/Tc = M.Fc.

Dans une deuxième étape (ii), on estime au moins deux auto-corrélations du signal numérisé $S_{tot}(t)$ ayant des décalages temporels $T_p$, d'une première part différents les uns des autres, d'une deuxième part inférieurs à l'intervalle de temps élémentaire Tc, et d'une troisième part multiples du rapport Tc/M (soit $T_p$ = N.Tc/M).

Cette deuxième étape (ii) peut être mise en oeuvre par un module de calcul MC du dispositif D qui est associé à la station de base (ou Node B) Ni.

Il est rappelé qu'en l'absence de décalage temporel, la fonction d'auto-corrélation consiste à effectuer le produit scalaire « <.> » d'une variable (ici $S_{tot}(t)$), considérée à un instant t, par le complexe conjugué (ici noté $S^*_{tot}(t)$) de cette variable, considéré à ce même instant t, puis à normaliser par le nombre de composantes du produit scalaire. Par ailleurs, en présence d'un décalage temporel $T_p$, la fonction d'auto-corrélation consiste à effectuer le produit scalaire « <.> » d'une variable (ici $S_{tot}(t)$), considérée à un instant t, par le complexe conjugué (ici $S^*_{tot}(t - T_p)$) de cette variable, considéré à l'instant t - $T_p$.

Ces auto-corrélations, d'une variable $S_{tot}(t)$ ayant fait l'objet d'un sur-échantillonnage, sont destinées à permettre l'extraction des informations contenues dans les échantillons qui sont disponibles dans chaque intervalle de temps élémentaire Tc.

Dans une troisième étape (iii), on estime la puissance du bruit thermique $N_0(t)$ qui est ajouté aux signaux utiles reçus par la station de base Ni à partir des auto-corrélations estimées du signal numérisé $S_{tot}(t)$ et de la connaissance des propriétés de la forme d'onde (w(t)) pour les décalages temporels des estimées.

Il est rappelé que la forme d'onde (ou pulse UMTS) w(t) (ou encore imp (t)) est connue et fixée par le standard du système considéré.

Les propriétés précitées sont notamment les valeurs prises par les coefficients λp qui apparaissent dans les expressions des auto-corrélations données ci-après.

Cette troisième étape (iii) peut être mise en oeuvre par le module de calcul MC du dispositif D qui est associé à la station de base (ou Node B) Ni.

En calculant (à l'aide du module de calcul MC) des auto-corrélations ayant des décalages temporels $T_p$ différents (par exemple $T_p = 0$ et $T_p$ multiple(s) de ¼ ($T_p$ = ¼ ou ½ ou ¾)), on peut constituer un système d'équations linéaires dont la résolution va notamment permettre d'estimer la valeur à l'instant t considéré de la puissance du bruit thermique $N_0(t)$.

En effet, si l'on considère que sur la voie montante d'un réseau UMTS les codes utilisés présentent la propriété $<C_k(t).C_i(t)> = 0$ lorsque k # i, alors les auto-corrélations peuvent être exprimées par les relations suivantes (en l'absence de bruit d'interférence induit par la présence d'un autre réseau de radiocommunication à spectre de bande de fréquences étroite ($F_{nb}$)) :

$$<(S_{tot}(t).S^{*}_{tot}(t))> = \sum_{k=1}^{K} E_k + N_0 \, ,$$

$$<(S_{tot}(t).S^{*}_{tot}(t-\tau_1))> = \lambda_1 . \sum_{k=1}^{K} E_k + N_0 \, ,$$

et plus généralement

$$<(S_{tot}(t).S^{*}_{tot}(t-\tau_p))> = \lambda_p . \sum_{k=1}^{K} E_k + N_0 \, ,$$

où $\sum_{k=1}^{K} E_k$ représente la charge induite par le trafic des K UEs avec $E_k = 1$ (énergie normalisée du signal d'un terminal UE), où $\sigma^2 = <(N_0(t).N_0^{*}(t-T_p))>$, et où les Àp sont les valeurs de la fonction d'auto correlation de la forme d'onde (notée imp(t)) pour les valeurs des décalages $p\dfrac{T_c}{M}$.

On comprendra que la connaissance de ces Àp (propriétés) permet alors de déterminer $N_0$ et $\sum_{k=1}^{K} E_k$.

A titre indicatif, en supposant un seul echo pour la propagation radio et des conditions de propagations stationnaires dans la durée d'observation choisie (pour simplifier les expressions), le calcul des valeurs des coefficients Àp peut se faire comme indiqué ci-dessous.

On part de la relation donnant le signal total $S_{tot}(t)$, mentionnée précédemment $\left( S_{tot}(t) = \sum_{k=1}^{K} X_k(t) + N_0(t) \right)$ pour calculer par expansion la moyenne (désignée ci-après par la fonction E) de chaque auto-corrélation décalée temporellement de $T_p (<(S_{tot}(t).S^{*}_{tot}(t-T_p))>)$ :

$$E(S_{tot}(t).S^*_{tot}(t-\tau_p)) = E(\left\{\sum_{k=1}^{K} X_k(t) + N_0(t)\right\}.\left\{\sum_{l=1}^{K} X_l^*(t-\tau_p) + N_0(t)\right\})$$

$$= E(\left\{\sum_{k=1}^{K} X_k(t).X_k^*(t-\tau_p)\right\}) + N_0 \quad [\text{car } E(X_k . X_j) = 0 \text{ pour } k \# i],$$

$$= \left\{\sum_{k=1}^{K} E(X_k(t).X_k^*(t-\tau_p))\right\} + N_0 .$$

Puis, en utilisant l'expression suivante :

$$\left(X_k(t).X_k^*(t-\tau_p)\right) = \sum_i c_k(iT_c).imp(t - iT_c - \tau_p).\sum_j c_k^*(jT_c)imp^*(t - jT_c - \tau_k - \tau_p),$$

on obtient alors:

$$E\left(X_k(t).X_k^*(t-\tau_p)\right) = \sum_i c_k(iT_c)c_k^*(iT_c).imp(t - iT_c - \tau_k)imp^*(t - jT_c - \tau_k - \tau_p),$$

et en utilisant la propriété des codes UMTS $E(C_k(iT_c).C_k(jT_c)) = 0$ lorsque i# j, et le fait que l'on a $E(c_k(iT_c)c_k^*(iT_c)) = 1$, on obtient finalement :

$$E\left(X_k(t).X_k^*(t-\tau_p)\right) = E(imp(t - iT_c)imp^*(t - iT_c - \tau_p)) = \lambda_p .$$

Si maintenant on remplace t par $T_p$ dans la relation exprimant le signal total $S_{tot}(t)$, avec $T_p = p\dfrac{T_C}{M}$ en raison du suréchantillonnage, alors on obtient :

$$S_{tot}(n\frac{T_c}{M}) = \sum_{k=1}^{K} X_k(n\frac{T_C}{M}) + N_0(n\frac{T_C}{M}) ,$$

et donc la fonction E mentionnée ci-avant peut se réécrire :

$$E\left(S_{tot}(n\frac{T_c}{M}) * S^*_{tot}((n-p)\frac{T_c}{M})\right) = E(\ imp(\frac{n}{M}T_c).imp^*((\frac{n-p}{M})T_c)).\sum_{k=1}^{K} E_k + N_0 ,$$

soit encore:

$$E\left(S_{tot}(n\frac{T_c}{M}) * S^*_{tot}((n-p)\frac{T_c}{M})\right) = \lambda_p \sum_{k=1}^{K} E_k + N_0 ,$$

avec

$$\lambda_p = E\left( imp\left(\frac{n}{M}T_c\right) . imp^*\left(\left(\frac{n-p}{M}\right)T_c\right) \right).$$

Compte tenu du fait que les expressions des auto-corrélations constituent des équations linéaires contenant chacune les deux inconnues $\sum_{k=1}^{K} E_k$ et $N_0$, il suffit d'utiliser deux auto-corrélations ayant des décalages temporels différents pour résoudre le système d'équations linéaires et ainsi connaître lesdites deux inconnues $\sum_{k=1}^{K} E_k$ et $N_0$, et par conséquent l'estimée de $N_0(t)$. Ainsi, on peut par exemple utiliser des décalages temporels $T_0 = 0$ et $T_1 = \frac{1}{4}$, ou bien $T_0 = 0$ et $T_3 = \frac{3}{4}$, ou encore $T_1 = \frac{1}{4}$ et $T_3 = \frac{3}{4}$, ou encore $T_1 = \frac{1}{4}$/ et $T_2 = \frac{1}{2}$. Mais, on peut également utiliser plus de deux équations linéaires et donc plus de deux auto-corrélations présentant des décalages temporels différents pour déterminer les deux inconnues $\sum_{k=1}^{K} E_k$ et $N_0$ avec une meilleure précision.

La description qui précède peut être facilement généralisée au cas où l'on est en présence d'un bruit d'interférence induit par la présence d'un autre réseau de radiocommunication à spectre de bande de fréquences étroite $F_{nb}$. En effet, dans ce cas le bruit total $I_{tot}$ qui est contenu dans le signal reçu $S_{tot}(t)$ peut se réécrire

$$S_{tot}(t) = N_0(t) + \sum_{k=1}^{K} E_k + n_{nb}(t),$$ où $n_{nb}(t)$ représente la somme des signaux d'interférence en bande étroite qui ne proviennent pas du réseau UMTS (et donc qui présentent pour chaque intervalle temporel $T_p$ une information longue et corrélée par rapport à Tc).

Dans ce cas, l'expression générale d'une auto-corrélation se réécrit :

$$\langle (S_{tot}(t).S^*_{tot}(t-T_p)) \rangle = \lambda_p \sum_{k=1}^{K} E_k + N_0 + E\left( n_{nb}(t) . n^*_{nb}(t) \right),$$

et il faut alors utiliser au moins trois auto-corrélations ayant des décalages temporels différents pour résoudre le système d'équations linéaires et ainsi connaître lesdites trois inconnues $\sum_{k=1}^{K} E_k$ , $N_0$ et $E(n_{nb}(t).n^*_{nb}b(t))$.

De préférence, deux des décalages temporels $T_p$ seront choisis parmi les multiples du rapport Tc/M, tandis qu'un troisième sera choisi de l'ordre de grandeur de l'inverse de la largeur de la bande de fréquences de l'autre système de radiocommunication (interférant). Ce troisième décalage temporel est par exemple un multiple de Tc/M qui est compris strictement dans l'intervalle $[1/(2*F_{nb}) ; 1/F_{nb}]$.

Les formules et relations données ci-avant peuvent être généralisés au cas des trajets multiples avec évanouissements. Les formules et relations correspondant à des décalages relatifs d'une somme de signaux, sans besoin de synchronisation entre ces signaux, restent en effet résistantes à toute hypothèse liée aux réceptions de différents échos décalés dans le temps issu du même signal utile transmis par un terminal UE.

Lorsque la fréquence moyenne de variation du bruit thermique $N_0(t)$ est relativement petite par rapport à la durée du traitement d'un signal reçu $S_{tot}(t)$, il est possible de déterminer une puissance du bruit thermique $N_0(t)$ de meilleure précision en effectuant un filtrage choisi de plusieurs estimées de la puissance du bruit thermique obtenues à partir de signaux s reçus par la même station de base Ni sur des périodes de temps différentes mais ayant la même durée choisie.

Pour ce faire, on peut par exemple reproduire une ou plusieurs fois les trois étapes (i) à (iii) avec un ou plusieurs autres signaux reçus par la même station de base Ni sur des périodes de temps différentes mais ayant la même durée choisie. On obtient alors au moins deux estimées de la puissance du bruit thermique $N_0(t)$ auxquelles on applique un filtrage choisi.

Plusieurs type de filtrage peuvent être envisagés, et notamment un moyennage, un filtrage de Kalman ou un filtrage prédictif.

Ainsi, si l'on n'a besoin de connaître la valeur de la puissance du bruit thermique $N_0(t)$ que toutes les secondes et que l'on est en mesure de déterminer une estimée de la puissance du bruit thermique $N_0(t)$ toutes les 100 ms, on peut par exemple effectuer la moyenne (filtrage) de dix estimées de la puissance du bruit thermique $N_0(t)$ successives à partir de dix signaux reçus successivement (qui correspondent à dix périodes de temps différentes mais ayant une même durée choisie (par exemple égale à 666 $\mu$s).

L'invention ne se limite pas aux modes de réalisation de dispositif de traitement, de procédé de traitement et de noeud de communication décrits ci-avant, seulement à titre d'exemple, mais elle englobe toutes les variantes que pourra envisager l'homme de l'art dans le cadre des revendications ci-après.

**Revendications**

1. Procédé d'estimation de la puissance du bruit thermique ajouté à des signaux reçus par un noeud de communication Ni d'un système de radiocommunication à accès multiple par répartition de codes, lesdits signaux ayant été transmis dans une bande de fréquences correspondant à un intervalle de temps élémentaire (Tc) prédéterminé et modulés par une forme d'onde (w(t)) de format prédéterminé, le procédé **caractérisé en ce qu'**il comprend les étapes suivantes :

   i) numériser un signal comprenant au moins un signal utile et du bruit et reçu sur une période de temps prédéterminée, selon une cadence d'échantillonnage égale à un paramètre de sur-échantillonnage M divisé par l'intervalle de temps é!émentaire Tc, M étant au moins égal à 2,
   ii) estimer au moins deux auto-corrélations dudit signal numérisé ayant des décalages temporels différents, inférieurs à l'intervalle de temps élémentaire Tc et multiples du rapport Tc/M, et
   iii) estimer la puissance du bruit thermique ajouté aux signaux reçus par le noeud de communication à partir des auto-corrélations estimées du signal numérisé et des propriétés de la forme d'onde w(t) pour les décalages temporels des estimées.

2. Procédé selon la revendication 1, dans lequel dans lequel on reproduit les étapes i) à iii) avec un autre signal reçu par ledit noeud de communication Ni sur une période de temps différente mais ayant substantiellement la même durée, de manière à obtenir une autre estimée de la puissance du bruit thermique, puis on effectue un filtrage de ces estimées.

3. Procédé selon l'une des revendications 1 et 2, dans lequel à l'étape iii) on estime la puissance du bruit thermique à partir d'un système d'équations linéaires constituées chacune par deux composantes d'auto-corrélation.

4. Procédé selon l'une des revendications 1 à 3, dans lequel à l'étape ii) on utilise un paramètre de sur-échantillonnage M égal à 4.

5. Procédé selon l'une des revendications 1 à 4, dans lequel à l'étape ii) on utilise des décalages temporels multiples de Tc/4.

6. Procédé selon l'une des revendications 1 à 5, dans lequel en présence de signaux reçus comportant une contribution issue d'un autre système de radiocommunication à spectre de bande de fréquences étroite $F_{nb}$, on estime au moins trois auto-corrélations du signal numérisé ayant trois décalages temporels différents, inférieurs à l'intervalle de temps élémentaire Tc, au moins deux de ces décalages temporels étant des multiples du rapport Tc/M tandis qu'un troisième est de l'ordre de grandeur de l'inverse de la largeur de la bande de fréquences de cet autre système de radiocommunication.

7. Procédé selon la revendication 6, dans lequel ledit troisième décalage temporel est un multiple de Tc/M qui est compris strictement dans l'intervalle [1/(2*$F_{nb}$) ; 1/$F_{nb}$].

8. Dispositif de traitement (D) pour l'estimation de la puissance du bruit thermique ajouté à des signaux reçus par un noeud de communication Ni d'un système de radiocommunication à accès multiple par répartition de codes, lesdits signaux ayant été transmis dans une bande de fréquences correspondant à un intervalle de temps élémentaire Tc prédéterminé et modulés par une forme d'onde (w(t)) de format prédéterminé, le dispositif (D) **caractérisé en ce qu'**il comprend:

- des moyens d'échantillonnage (ME) agencés pour numériser un signal comprenant au moins un signal utile et du bruit et reçu sur une période de temps prédéterminée, selon une cadence d'échantillonnage égale à un paramètre de sur-échantillonnage M divisé par l'intervalle de temps élémentaire Tc, M étant au moins égal à 2, et
- des moyens de calcul (MC) agencés i) pour estimer au moins deux auto-corrélations du signal numérisé ayant des décalages temporels différents, inférieurs à l'intervalle de temps élémentaire Tc et multiples du rapport Tc/M, et ii) pour estimer la puissance du bruit thermique ajouté aux signaux reçus par le noeud de communication à partir des auto-corrélations estimées du signal numérisé et des propriétés de la forme d'onde w(t) pour les décalages temporels des estimées.

9. Dispositif selon la revendication 8, dans lequel lesdits moyens de calcul (MC) sont agencés pour effectuer un filtrage choisi d'estimées du bruit thermique obtenues à partir d'au moins deux signaux reçus sur des périodes de temps différentes mais ayant substantiellement la même durée..

10. Dispositif selon l'une des revendications 8 et 9, dans lequel les moyens de calcul (MC) sont agencés pour estimer la puissance du bruit thermique à partir d'un système d'équations linéaires constituées chacune par deux composantes d'auto-corrélation.

11. Dispositif selon l'une des revendications 8 à 10, dans lequel les moyens d'échantillonnage (ME) sont agencés pour utiliser une valeur du paramètre de sur-échantillonnage M égale à 4.

12. Dispositif selon l'une des revendications 8 à 11, dans lequel les moyens de calcul (MC) sont agencés pour utiliser des décalages temporels multiples de Tc/4.

13. Dispositif selon l'une des revendications 8 à 12, dans lequel les moyens de calcul (MC) sont agencés, en présence de signaux utiles reçus comportant une contribution issue d'un autre système de radiocommunication à spectre de bande de fréquences étroite $F_{nb}$, pour estimer au moins trois auto-corrélations du signal numérisé ayant trois décalages temporels différents, inférieurs à l'intervalle de temps élémentaire Tc, au moins deux de ces décalages temporels étant des multiples du rapport Tc/M tandis qu'un troisième est de l'ordre de grandeur de l'inverse de la largeur de la bande de fréquences de cet autre système de radiocommunication.

14. Dispositif selon la revendication 13, dans lequel ledit troisième décalage temporel est un multiple de Tc/M qui est compris strictement dans l'intervalle $[1/(2*F_{nb}) ; 1/F_{nb}]$.

15. Noeud de communication Ni pour un réseau d'accès radio d'un système de radiocommunication à accès multiple par répartition de codes, comprenant un dispositif de traitement (D) selon l'une des revendications 8 à 14.

**Claims**

1. A method for estimating the power of the thermal noise added to signals received by a communication node Ni of a code division multiple-access radio communication system, said signals having been transmitted within a frequency range corresponding to a predetermined elementary interval of time (Tc) and modulated by a waveform (w(t)) with a predetermined format, which method is **characterized in that** it comprises the following steps:

   i) digitizing a signal that includes noise and at least one useful signal, received over a predetermined period of time, based on a sampling rate equal to a subsampling parameter M divided by the elementary interval of time Tc, M being greater than or equal to 2,
   ii) estimating at least two self-correlations of said digitized signal which have different time gaps and are less than the elementary interval of time Tc and multiples of the ratio Tc/M, and
   iii) estimating the power of the thermal noise added to the signals received by the communication node based on the estimated self-correlations of the digitized signal and properties of the waveform w(t) for the time gaps of the estimates.

2. A method according to claim 1, wherein the steps i) to iii) are reproduced with another signal received by said communication node Ni over a different period of time that has substantially the same duration, so as to obtain another estimate of the power of the thermal noise, and then these estimates are filtered.

3. A method according to one of the claims 1 and 2, wherein during step iii) the power of the thermal noise is estimated based on a system of linear equations each constituted by two self-correlation components.

4. A method according to one of the claims 1 to 3, wherein during step ii) a subsampling parameter M that is equal to 4 is used.

5. A method according to one of the claims 1 to 4, wherein during step ii) time gaps that are multiples of Tc/4 are used.

6. A method according to one of the claims 1 to 5, wherein in the presence of received signals comprising a contribution taken from another radio communication system with a narrow frequency band spectrum $F_{nb}$, at least three self-correlations of the digitized signal, with three different time gaps each less than the elementary time interval Tc are estimated, at least two of these time gaps being multiples of the ratio Tc/M, while a third is on the order of magnitude of the reverse of the frequency bandwidth of that other radio communication system.

7. A method according to claim 6, wherein said third time gap is a multiple of Tc/M, which is strictly comprised within the interval $[1/(2*F_{nb}); 1/F_{nb}]$.

8. A processing device (D) for estimating the power of the thermal noise added to signals received by a communication node Ni of a code division multiple access radio communication system, said signals having been transmitted within frequency range corresponding to a predetermined elementary interval of time {-Tc} and modulated by a waveform (w(t)) with a predetermined format, the device (D) being **characterized in that** it comprises:

   - sampling means (ME) designed to digitize a signal comprising noise and at least one useful signal and received over a predetermined period of time, based on a sampling rate equal to a subsampling parameter M divided by the elementary interval of time Tc, M being greater than or equal to 2,
   - calculation means (MC) designed to i) estimate at least two self-correlations of said digitized signal which have different time gaps, each less than the elementary interval of time Tc and multiples of the ratio Tc/M, and ii) estimate the power of the thermal noise added to the signals received by the communication node based on the estimated self-correlations of the digitized signal and properties of the waveform w(t) for the time gaps of the estimates.

9. A device according to claim 8, wherein said calculation means (MC) are designed to perform a chosen filtering of estimates of the thermal noise obtained from at least two signals received over different periods of time that have substantially the same duration.

10. A device according to one of the claims 8 and 9, wherein the calculation means (MC) are designed to estimate the power of the thermal noise based on a system of linear equations each constituted by two self-correlation components.

11. A device according to one of the claims 8 to 10, wherein the sampling means (ME) are designed to use a value of the subsampling parameter M equal to 4.

12. A device according to one of the claims 8 to 11, wherein the calculation means (MC) are designed to use time gaps that are multiples of Tc/4.

13. A device according to one of the claims 8 to 12, wherein the calculation means (MC) are designed, in the presence of received signals that comprise a contribution taken from another radio communication system with a narrow frequency band spectrum, to estimate at least three self-correlations of the digitized signal, with three different time gaps each less than the elementary time interval Tc are estimated, at least two of these time gaps being multiples of the ratio Tc/M, while a third is on the order of magnitude of the reverse of the frequency bandwidth of that other radio communication system.

14. A device according to claim 13, wherein said third time gap is a multiple of Tc/M, which is strictly comprised within the interval $[1/(2*F_{nb}); 1/F_{nb}]$.

15. A communication node Ni for a code division multiple-access radio communication system, comprising a processing device (D) according to one of the claims 8 to 14.

**Patentansprüche**

1. Verfahren zur Schätzung der den an einem Kommunikationsknoten Ni eines Funkkommunikationssystem mit Codemultiplex-Vielfachzugriff empfangenen Signalen hinzugefügten thermischen Rauschleistung, wobei die besagten Signale in einem einem vorbestimmten Grundzeitintervall (Tc) entsprechenden Frequenzband übertragen und mit einer Wellenform (w(t)) vorbestimmten Formats moduliert wurden, wobei das Verfahren **dadurch gekennzeichnet ist, dass** es die folgenden Schritte umfasst:

   i) Digitalisieren eines Signals, welches mindestens ein Nutzsignal und Rauschen enthält und in einer vorbestimmten Zeitperiode empfangen wird, gemäß einer Abtastrate, welche einem Überabtastparameter M geteilt durch das Grundzeitintervall Tc entspricht, wobei M mindestens gleich 2 ist,
   ii) Schätzen von mindestens zwei Autokorrelationen des besagten digitalisierten Signals mit unterschiedlichen Zeitversätzen, die geringer als das Grundzeitintervall Tc und ein Vielfaches des Verhältnisses Tc/M sind, und
   iii) Schätzen der den an dem Kommunikationsknoten empfangenen Signalen hinzugefügten thermischen Rauschleistung ausgehend von den geschätzten Autokorrelationen des digitalisierten Signals und den Eigenschaften der Wellenform w(t) für die geschätzten Zeitversätze der Schätzungen.

2. Verfahren nach Anspruch 1, wobei man die Schritte i) bis iii) mit einem anderen an dem besagten Kommunikationsknoten Ni in einer unterschiedlichen vorbestimmten Zeitperiode, die jedoch im Wesentlichen dieselbe Dauer hat, empfangenen Signal reproduziert, um eine andere Schätzung der thermischen Rauschleistungen zu erhalten, und anschließend eine Filterung dieser Schätzungen durchführt.

3. Verfahren nach einem der Ansprüche 1 und 2, wobei man in Schritt iii) die thermische Rauschleistung ausgehend von einem linearen Gleichungssystem, dessen Gleichungen jeweils aus zwei Autokorrelationskomponenten bestehen, schätzt.

4. Verfahren nach einem der Ansprüche 1 bis 3, wobei man in Schritt ii) einen Überabtastparameter M von gleich 4 verwendet.

5. Verfahren nach einem der Ansprüche 1 bis 4, wobei man in Schritt ii) Zeitversätze, die ein Vielfaches von Tc/4 sind, verwendet.

6. Verfahren nach einem der Ansprüche 1 bis 5, wobei man bei Vorhandensein von empfangenen Signalen, die einen aus einem anderen Funkkommunikationssystem mit einem Schmalfrequenzbandspektrum $F_{nb}$ stammenden Beitrag enthalten, mindestens drei Autokorrelationen des digitalen Signals mit drei verschiedenen Zeitversätzen, welche geringer als das Grundzeitintervall Tc sind, schätzt, wobei mindestens zwei dieser Zeitversätze ein Vielfaches des Verhältnisses Tc/M sind, während ein dritter Zeitversatz der Größenordnung des Umkehrwertes der Frequenzbandbreite dieses anderen Funkkommunikationssystem entspricht.

7. Verfahren nach Anspruch 6, wobei der besagte dritte Zeitversatz ein Vielfaches von Tc/M, welches streng im Intervall $[1/(2*F_{nb}); 1/F_{nb}]$ begriffen ist, ist.

8. Verarbeitungsvorrichtung (D) für die Schätzung der den an einem Kommunikationsknoten Ni eines Funkkommunikationssystems mit Codemultiplex-Vielfachzugriff empfangenen Signalen hinzugefügten thermischen Rauschleistung, wobei die besagten Signale in einem einem vorbestimmten Grundzeitintervall (Tc) entsprechenden Frequenzband übertragen und mit einer Wellenform (w(t)) vorbestimmten Formats moduliert wurden, wobei die Vorrichtung (D) **dadurch gekennzeichnet ist, dass** sie umfasst:

   - Abtastmittel (ME), die dazu ausgelegt sind, ein Signal, welches mindestens ein Nutzsignal und Rauschen enthält und in einer vorbestimmten Zeitperiode empfangen wird, gemäß einer Abtastrate, welche einem Überabtastparameter M geteilt durch das Grundzeitintervall Tc entspricht, wobei M mindestens gleich 2 ist, zu digitalisieren, und
   - Rechenmittel (MC), die dazu ausgelegt sind, i) mindestens zwei Autokorrelationen des digitalisierten Signals mit unterschiedlichen Zeitversätzen, welche geringer als das Grundzeitintervall Tc und ein Vielfaches des Verhältnisses Tc/M sind, zu schätzen, und ii) die den an dem Kommunikationsknoten empfangenen Signalen hinzugefügte thermische Rauschleistung ausgehend von den geschätzten Autokorrelationen des digitalisierten Signals und den Eigenschaften der Wellenform w(t) für die Zeitversätze der Schätzungen zu schätzen.

9. Vorrichtung nach Anspruch 8, wobei die Rechenmittel (MC) dazu ausgelegt sind, eine ausgewählte Filterung von Schätzungen des thermischen Rauschens, welche ausgehend von mindestens zwei in unterschiedlichen Zeitperioden, die jedoch im Wesentlichen dieselbe Dauer haben, empfangenen Signalen erhalten werden, durchzuführen.

10. Vorrichtung nach einem der Ansprüche 8 und 9, wobei die Rechenmittel (MC) dazu ausgelegt sind, die thermische Rauschleistung ausgehend von einem linearen Gleichungssystem, in welchem die Gleichungen jeweils aus zwei Autokorrelationskomponenten bestehen, zu schätzen.

11. Vorrichtung nach einem der Ansprüche 8 bis 10, wobei die Abtastmittel (ME) dazu ausgelegt sind, einen Wert des Überabtastparameters M von gleich 4 zu verwenden.

12. Vorrichtung nach einem der Ansprüche 8 bis 11, wobei die Rechenmittel (MC) dazu ausgelegt sind, die Zeitversätze, die ein Vielfaches von Tc/4 sind, zu verwenden.

13. Vorrichtung nach einem der Ansprüche 8 bis 12, wobei die Rechenmittel (MC) dazu ausgelegt sind, bei Vorhandensein von empfangenen Nutzsignalen, die einen aus einem anderen Funkkommunikationssystem mit einem Schmalfrequenzbandspektrum $F_{nb}$ stammenden Beitrag enthalten, mindestens drei Autokorrelationen des digitalisierten Signals mit drei verschiedenen Zeitversätzen, welche geringer als das Grundzeitintervall Tc sind, zu schätzen, wobei mindestens zwei dieser Zeitversätze ein Vielfaches des Verhältnisses Tc/M sind, während ein dritter Zeitversatz der Größenordnung des Umkehrwertes der Frequenzbandbreite dieses anderen Funkkommunikationssystem entspricht.

14. Vorrichtung nach Anspruch 13, wobei der besagte dritte Zeitversatz ein Vielfaches von Tc/M, welches streng im Intervall $[1/(2*F_{nb}); 1/F_{nb}]$ begriffen ist, ist.

15. Kommunikationsknoten Ni für ein Funkzugangsnetzwerk eines Funkkommunikationssystems mit Codemultiplex-Vielfachzugriff, umfassend eine Verarbeitungsvorrichtung (D) gemäß einem der Ansprüche 8 bis 14.

Figure unique

**EP 2 278 725 B1**

## RÉFÉRENCES CITÉES DANS LA DESCRIPTION

**Documents brevets cités dans la description**

- WO 2009038502 A